# EUROPEAN PATENT APPLICATION

(11) **EP 1 147 850 A2**
(43) Date of publication of application: **24.10.2001**
(21) Application number: 01108689.9
(22) Date of filing: 06.04.2001
(51) Int. Cl.: B23Q 7/14, B65D 21/08

(54) **Modular container for conveying a workpiece along an assembly line**

(30) Priority: 20.04.2000 IT BO000229
(71) Applicant: PIERRE SAS, 42043 Gattatico (Reggio Emilia) (IT)
(72) Inventor: Pallini, Angelo, I 42040 Campegine (IT)
(74) Representative: Sassatelli, Franco T., Dr.

(57) **Abstract**

It consists of a modular setting element to be formed by assembling of two parts. A plastic single body, to be always used, consists of a platform-mold (1) having on its side ends an underlying couple of suuports (2) with linear couple of grooves (3) placed in reference of the stopping and lifting means acting in working station, and having interposed a base (4) and an upper centring container (5) with a flat border (6) and with a cilindric hollow (7) having circular crown bottom (8) with an unloading hole (9). The other body consists of a modular part with two half-parts one of which for the specific working formed by a metallic ring-shaped plate (10) with outside border to be in relation with the border of the centering container (5) and with inside profile (11) to be made in transversal section reference with the working body with longitudinal disposition on the circular crown bottom (8) so to form in composition a setting in a solidary constraint condition, while the other part for the generic use formed by a centring ferrule (12) in stainless alloy with a width to be in relation with the flat border (6).

## Description

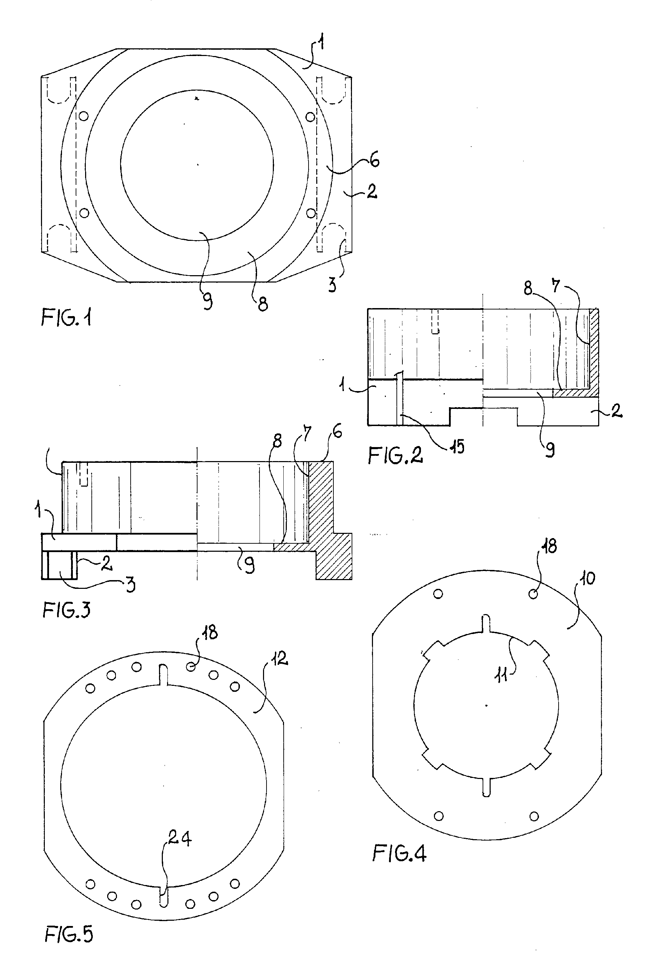

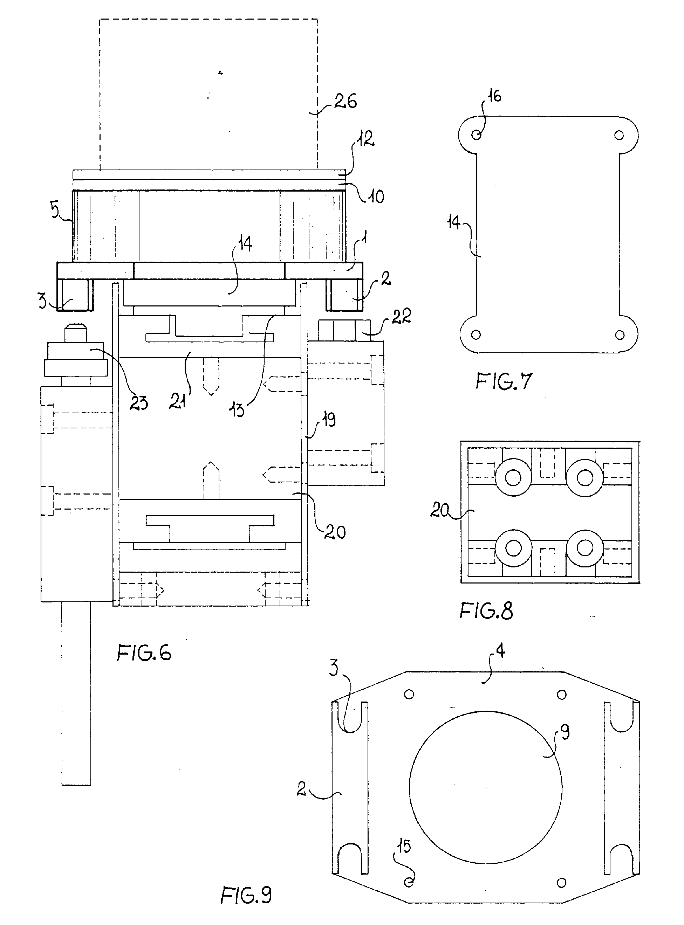

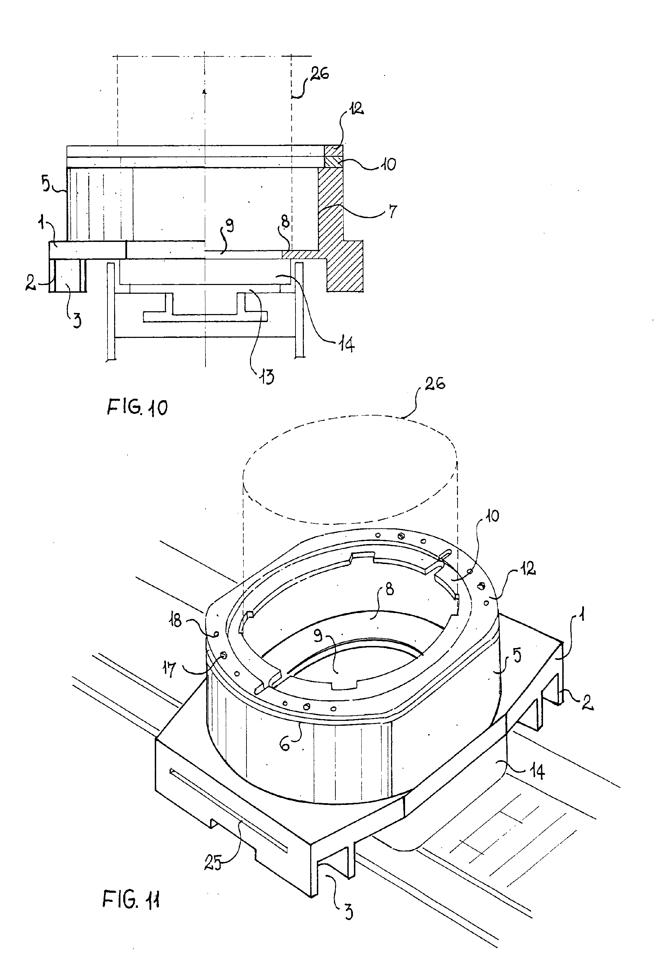

The invention refers to a new stabilizing and transport apparatus to transport onto a working station the mechanical elements to be assembled in the automatic workings. Said apparatus characterized by a new container to be combined with a structural semplification of the transport apparatus so principally determining a big reduction in the manufacturing costs and in the plant management costs. In the automatic working phases of the mechanical elements to be assembled, to determine the working body stabilization when it is placed on the conveyor which transports the same from a station to another, are currently provided setting apparatuses for the transport that, after the element is taken out, are sent again in starting position of the movement. A first known technology used flat-means only able to determine a working body stability for leaning on the flat, then the current technology provides metal modular setting apparatuses with an inside hollow into which the element is to be put with permanent maintenance disposition. These apparatuses use centring parts of the worked body, said centring only to be actuated using a precision mechanics by means of pressing forms to be put to periodical grinding acting on which the worked body is to be brought in the correct working position. Moreover the transport on line of said setting apparatuses is actuated by a couple of creepers with simmetrical disposition on a central catching part. Regarding the setting means the invention gives a new technology fits to realize a principal industrial advancement by using a new plastic modular element with a cilindric hollow into which the stable support in position onto the bottom of the worked body is to be obtained by disposition in opening, with outline reference, of a metallic anular setting element with transversal disposition to be fitted on its loading mouth and then to be blocked in position by a centring ferrule. In this way determing a new setting body to be obtained by composition of two parts, a plastic modular element to be used for the generic use and a preformed anular plate setting element for the specific use, a high reduction of the manufacturing costs is obtained and also a reduction of the costs of the plants working such as the worked body centring is obtained by using a part, the plate setting element, acting the centring with mnemonic reference. While, regarding the system of transport on line, the invented apparatus futher realizes a structural semplification by using only one jack chain with coupling with axial disposition. Foundamentally the invented apparatus consists of a modular setting element to be formed by assembling of two parts: a plastic single body and a modular body with two elements. Said single body, to be always used, consists of a platform-mold 1 having on its side ends an underlying couple of supports 2 with linear couple of grooves 3 placed in reference of the stopping and lifting means acting in the working station; moreover having said single body interposed a base 4 and an upper centering container 5 with a flat border 6 and with a cilindric hollow 7 having circular crown bottom 8 with an unloading hole 9. The modular body consists of two parts one of which for the specific working formed by a metalic ring-shaped plate 10 with outside border to be in relation with the border of the centering container 5 and with inside profile 11 to be made in transversal section reference with the working body with longitudinal disposition on the circular crown bottom 8 so to form in composition a setting in a solidary constraint condition, while the other element for the generic use formed by a centring ferrule 12 in stainless alloy with a width to be in relation with the flat border 6. The invented modular setting element to be arranged for the mounting on a transport chain 13 on line by placing the base 4 onto the distantial yoke 14 with screws 15 passing into the threaded holes 16. With the working body in position into the hollow 7 are put one after the other in superimposition on the border 6 the ring-shaped plate 10 and the cetring ferrule 12 then blocking all the parts with screws 17 passing in threaded holes 18. The transport device on line uses on a frame body ,formed by a couple of sides 19 to be supported in modular composition by metallic parts 20, jaws 21 for the transport chain 13. For the working stopping cilindric apparatuses 22 and lifting apparatuses 23 are provided that act onto the grooves 3 of the supports 2. For bringing the setting element in station in the predetermined position, the centring ferrule 12 has a fiducial point 24 and moreover the same provides a set of counterposed holes 18. For the electronic operation the setting element provides a set of points 25 for the plane magnetic sensors. The invented apparatus is illustrated in an indicative way in the drawings of sheets 1, 2 and 3. In sheet 1 fig. 1 is top view of the plastic single body to be used for the generic use and showing sketched the couple of supports 2 with grooves 3. Fig. 2 is frontal perspective and section view of the same ap paratus. Fig. 3 is side perspective and section view of the same. The modular body forming the setting element is then illustrated in fig. 4 showing the metalic ring-shaped plate 10 for the specific use. While fig. 5 is view of the centring ferrule 12 in stainless alloy for the generic use showing also the set of threaded holes 18 for passing of the screws 17. In sheet 2 fig. 6 is total transversal section view of the transport plant with on line the invented setting element bringing a working body 26 in sketched view. Fig. 7 is lying view of the yoke 14. Fig. 8 is lying view of the metalic part 20. Fig. 9 is view from the bottom of the setting apparatus. In sheet 3 fig. 10 is view of perspective half-part and transversal section half-part of the setting apparatus equipped with a yoke 14 on transport chain 13 and with in position a working body 16 in sketched view. Fig. 11 is perspective view of the same device of fig. 10. In relation to the use necessities the setting element form and the stabilization means are provided in different way.

## Claims

1. Container-conveyer on line for mechanical elements to be assembled in the automatic workings consists of a modular setting element to be formed by assembling of two parts: a plastic single body and a modular body with two elements; **characterized in that**
the single body, to be always used, consists of a platform-mold (1) having on its side ends an underlying couple of supports (2) with linear couple of grooves (3) placed in reference of the stopping and lifting means acting in the working station, moreover having the single body interposed a base (4) and an upper centering container (5) with a flat border (6) and with a cilindric hollow (7) having circular crown bottom (8) with an unloading hole (9);
and **in that**
the modular body consists of two parts one of which for the specific working formed by a metallic ring-shaped plate (10) with outside border to be in relation with the border of the centering container (5) and with inside profile (11) to be made in transversal section reference with the working body with longitudinal disposition on the circular crown bottom (8) so to form in composition a setting in a solidary constraint condition, while the other element for the generic use formed by a centring ferrule (12) in stainless alloy with a width to be in relation with the flat border (6);
and **in that**
the modular setting element to be arranged for the mounting on a transport chain (13) on line by placing the base (4) onto the distantial yoke (14) with screws (15) passing into the threaded holes (16), with the working body in position into the hollow (7) are put one after the other in superimposition on the border (6) the ring-shaped plate (10) and the centring ferrule (12) then blocking all the parts with screws (17) passing in threaded holes (18).

2. Container-conveyer on line for mechanical elements to be assembled in the automatic workings, as per claim 1, **characterized in that** the transport device on line uses on a frame body, formed by a couple of sides (19) to be supported in modular composition by meallic parts (20), jaws (21) for the transport chain (13).

3. Container-conveyer on line for mechanical elements to be assembled in the automatic workings, as per claim 1, **characterized in that** for the working stopping cilindric apparatuses (22) and lifting apparatuses (23) are provided that act onto the grooves (3) of the supports (2).

4. Container-conveyer on line for mechanical elements to be assembled in the automatic workings, as per claim 1, **characterized in that** for bringing the setting element in station in the predetermined position, the centring ferrule (12) has a fiducial point (24) and moreover the same provides a set of counterposed holes (18).

5. Container-conveyer on line for mechanical elements to be assembled in the automatic workings, as per claim 1, **characterized in that** for the electronic operation the setting element provides a set of points (25) for the plane magnetic sensors.
